(19) Europäisches Patentamt
European Patent Office
Office européen des brevets

(11) **EP 1 816 597 A2**

(12) **DEMANDE DE BREVET EUROPEEN**

(43) Date de publication:
**08.08.2007 Bulletin 2007/32**

(51) Int Cl.:
***G06Q 30/00*** *(2006.01)*

(21) Numéro de dépôt: **07101709.9**

(22) Date de dépôt: **05.02.2007**

(84) Etats contractants désignés:
**AT BE BG CH CY CZ DE DK EE ES FI FR GB GR
HU IE IS IT LI LT LU LV MC NL PL PT RO SE SI
SK TR**
Etats d'extension désignés:
**AL BA HR MK YU**

(30) Priorité: **07.02.2006 FR 0650422**

(71) Demandeur: **Mediametrie
92300 Levallois Perret (FR)**

(72) Inventeur: **Vanheuverzwyn, Aurélie
92110 Clichy (FR)**

(74) Mandataire: **Kohn, Philippe
Cabinet Philippe Kohn,
30, rue Hoche
93500 Pantin (FR)**

(54) **Système de mesure d'audience de médias sur au moins un réseau de communication Internet**

(57) La présente invention concerne un système de mesure d'audience de médias sur au moins un réseau de communication comme un réseau de communication Internet.

Le système de mesure d'audience fonctionne sur une collection de réseaux comportant au moins un réseau de communication. Une pluralité d'utilisateurs prédéterminés est associée à un premier jeu de machines (D, LT) connectées à un réseau de ladite collection de réseaux, dans une première zone d'utilisation et à au moins un second jeu de machines (AL) connectées à un réseau de ladite collection de réseaux, dans une seconde zone d'utilisation.

Le système de l'invention consiste en ce qu'un moyen de calcul (M1 - M5) est prévu pour produire, à partir du premier jeu de machines, des sosies d'utilisateurs pour au moins une autre zone d'utilisation (AL) de manière à reconstituer la pluralité des utilisateurs.

Fig. 4

EP 1 816 597 A2

## Description

La présente invention concerne un système de mesure d'audience de médias sur au moins un réseau de communication comme un réseau de communication Internet.

Dans l'état de la technique, il est connu de réaliser la mesure d'audience sur la base d'un groupe d'utilisateurs d'un média déterminé ou selon un autre point de vue de l'invention, sur la base d'un panel d'individus ayant accès à un média déterminé. Chaque utilisateur du groupe ou individu du panel est sélectionné sur la base de critères statistiques déterminés et y adhère de son plein gré. Un appareil spécialisé installé chez l'utilisateur ou individu du panel permet de détecter les actions exécutées par l'utilisateur et de les comptabiliser sur une période de temps donnée. L'appareil spécialisé de mesure d'audience est alors connecté à un centre d'élaboration de statistiques qui permet de fournir des résultats statistiques d'audience du média déterminé mesuré à l'aide des appareils spécialisés qui retournent des données d'audience sur la base du groupe d'utilisateurs observés.

Cette technique de mesure d'audience est bien connue dans le domaine des médias traditionnels que constituent la télévision et la radiodiffusion notamment. Cependant, il est apparu un besoin d'appliquer cette technique de mesure d'audience à d'autres médias comme ceux qui apparaissent sur le réseau Internet.

Dans l'état de la technique, on a déjà proposé de réaliser une détection des actions de tout utilisateur d'un site Web offrant un contenu à l'aide de petits fichiers installés sur la machine de l'utilisateur et qui y sont créés à l'aide de courts programmes insérés dans le contenu que l'utilisateur demande en se connectant au site fournisseur de contenus. De tels fichiers, dénommés "cookies", peuvent être édités par une application exécutée sur le site serveur de contenus de sorte que les actions précédemment exécutées sur le site par l'utilisateur qui se connecte soient repris de manière à préparer un envoi plus rapide et mieux ciblé de contenus à son intention.

Cependant, à cause notamment de politiques de confidentialité et de réglementation concernant les droits individuels, il n'est pas possible d'obtenir des informations analogues à celles issues d'une étude d'audience réalisée sur un média traditionnel radiodiffusé.

Dans l'état de la technique, on a aussi proposé d'insérer dans les contenus demandés par le navigateur d'un utilisateur d'un site Internet des marqueurs qui sont de petits programmes ou scripts à l'aide desquels il est possible de collecter des données associées à l'utilisation d'une machine donnée et qui sont transférées vers le site qui a émis le marqueur. Cependant, dans cette technique de marqueur, ainsi qu'il sera exposé plus loin, il n'est pas possible de dépasser un certain niveau d'analyse de données personnelles à cause notamment des réglementations en matière de protection des droits individuels.

On dit qu'une telle technique de mesure de trafic est centrée sur le site qui a émis le marqueur. Cependant, une telle technique ne permet pas de déterminer réellement les éléments d'audience associés à des caractères personnels d'un utilisateur de contenu.

Par ailleurs, dans le domaine technique de la mesure d'audience ou de la mesure de trafic sur des réseaux de communication, un utilisateur ou le comportement d'un utilisateur du réseau sur une machine donnée est représentée par un objet informatique comme une table de données selon une forme ou structure de donnée prédéterminée. Dans la suite, le terme d'utilisateur sera pris selon le contexte ou bien comme référant à un individu déterminé ou bien comme référant à sa représentation sous forme d'un objet informatique comme une table de données d'utilisation d'au moins une machine connectée à au moins un réseau de communication déterminé.

Par ailleurs, on s'est aperçu que chaque utilisateur du media pouvait se connecter à un media déterminé ou bien par un autre réseau, ou bien sur une autre machine sur le même réseau. Particulièrement quand cet individu appartient à un panel traditionnel, ses usages n'utilisent pas alors tous l'appareil de mesure d'audience. On a donc analysé les différents usages en distinguant les lieux de connexion et les individus qui utilisent les réseaux de communication de ces lieux de connexion. On s'est aperçu que les dispositifs de mesure d'audience ne permettaient pas de tenir compte des individus qui se connectent dans au moins deux lieux différents, sur le même réseau ou sur des réseaux différents. Par exemple ; la mesure d'audience par panel est restreinte aux accès aux médias limités en nombre d'utilisateurs (exclusion des PC en libre service, des cybercafés...) dans l'application au réseau de communication dénommé Internet.

C'est un avantage de la présente invention de proposer un système permettant de résoudre les inconvénients de l'état de technique précité.

En effet, la présente invention concerne un système de mesure d'audience sur une collection de réseaux comportant au moins un réseau de communications, dans lequel une pluralité d'utilisateurs prédéterminés est associée à un premier jeu de machines connectées à un réseau de ladite collection de réseaux, dans une première zone d'utilisation et à au moins un second jeu de machines connectées à un réseau de ladite collection de réseaux, dans une seconde zone d'utilisation.

Le système de l'invention consiste en ce qu'un moyen de calcul est prévu pour produire, à partir du premier jeu de machines, des sosies d'utilisateurs pour au moins une autre zone d'utilisation de manière à reconstituer la pluralité des utilisateurs.

Selon un aspect de l'invention, le système de mesure d'audience comporte un premier composant qui comporte des moyens pour produire des données de cadrage par zone d'utilisation à partir d'une mesure déclarative d'utilisation du média par zone d'utilisation sur une période de temps donnée sur la base d'un échantillon d'utilisateurs du média.

Selon un aspect de l'invention, le système de mesure d'audience comporte un second composant qui comporte des moyens pour produire une liste de fréquences théoriques d'utilisation du média sur les autres zones d'utilisation sur la base des données de cadrage produites par ledit premier composant et sur la base de données {NV_s(i), NP_s (i) ; i, s} regroupant le nombre de visites NV_s(i) et le nombre de pages vues NP_s(i) pour chaque utilisateur i de l'échantillon analysé en référence au site s, la base étant produite par un système de mesure d'audience centré sur l'utilisateur.

Selon un aspect de l'invention, le système de mesure d'audience comporte un troisième composant pour exécuter un tirage équilibré de sosies d'utilisateurs faisant partie d'une zone d'utilisation non couverte par un système de mesure d'audience centré sur l'utilisateur parmi les utilisateurs membres du panel qui comporte un premier module de formatage selon un format déterminé des données individuelles et de la base de données {NV_s(i), NP_s(i) ; i ; s} regroupant le nombre de visites NV_s(i) et le nombre de pages vues NP_s(i) pour chaque utilisateur i de l'échantillon analysé produite par un système de mesure d'audience centré sur l'utilisateur et pour un média s donné, ainsi que des moyens pour produire une récupération de données individuelles des dits sosies de sorte qu'un moyen de concaténation des données précitées produise des fichiers de données individuelles intégrant les individus de ladite zone des sosies.

Selon un aspect de l'invention, le système de mesure d'audience comporte un quatrième composant qui traite les données issues des premier et second composants de manière à déterminer les utilisateurs se trouvant à l'intersection de la zone d'utilisation couverte par un système de mesure d'audience centré sur l'utilisateur et des autres zones d'utilisation et à calculer un taux de sondage permettant la sélection aléatoire d'enregistrements de la base de données initiale de manière à produire des données individuelles intégrant les données d'audience depuis les autres zones d'utilisation des utilisateurs se trouvant à l'intersection de la zone d'utilisation couverte par un système de mesure d'audience centré sur l'utilisateur et des autres zones d'utilisation.

Selon un aspect de l'invention, le système de mesure d'audience comporte un cinquième composant de réalisation d'un calage des résultats calculés à partir de la base de données issues des troisième et quatrième composants issue d'un système de mesure d'audience centré sur l'utilisateur sur ceux provenant d'un système de mesure de trafic centré sur le site de manière à produire une base de données d'audience d'une pluralité de sites Internet tenant compte de l'ensemble des domaines d'utilisation du média.

D'autres avantages et caractéristiques seront mieux compris à l'aide de la description et des figures annexées parmi lesquels :

- la figure 1 représente un système de l'état de la technique permettant de suivre les activités depuis un site fournisseur de contenus vers un utilisateur quelconque ;
- la figure 2 représente un système de l'état de la technique permettant de suivre les activités d'une personne membre d'un groupe d'utilisateurs prédéterminés vers un nombre indéterminé de sites fournisseurs de contenus ;
- la figure 3 représente une partition de la population des utilisateurs selon les zones d'utilisation du média permettant de comprendre l'invention ;
- la figure 4 représente un organigramme des traitements successifs que le système de l'invention applique ;
- la figure 5 représente un mode de réalisation d'un premier composant du système de mesure d'audience de la présente invention selon un mode particulier de réalisation ;
- la figure 6 représente un mode de réalisation d'un second composant du système de mesure d'audience de la présente invention selon un mode particulier de réalisation ;
- la figure 7 représente un mode de réalisation d'un troisième composant du système de mesure d'audience de la présente invention selon un mode particulier de réalisation ;
- la figure 8 représente un mode de réalisation d'un quatrième composant du système de mesure d'audience de la présente invention selon un mode particulier de réalisation ;
- la figure 9 représente un mode de réalisation d'un cinquième composant du système de mesure d'audience de la présente invention selon un mode particulier de réalisation.

Dans la suite du texte, on utilisera selon le contexte le concept de mesure d'audience quand il s'agit d'utilisation relatives à un utilisateur déterminable, et de mesure de trafic quand l'utilisateur n'est pas directement identifiable. Cependant, le terme de mesure d'audience sera compris comme s'appliquant aussi le cas échéant au terme de mesure de trafic. Le terme de zone d'utilisation indique selon le contexte le domaine d'activité sur au moins un réseau de communication sur lequel est diffusé ou mis à disposition un media comme un contenu éditorial, ou les utilisateurs exerçant une activité dans tout ou partie d'une zone d'utilisation, par exemple des utilisateurs appartenant simultanément aux caractéristiques des utilisateurs de zones d'utilisation différentes. Un réseau de communication peut être composé par exemple par un réseau selon une technique déterminée, par exemple le réseau Internet composés d'une pluralités de sites de mise à disposition de contenus ou de diffusion en flux, mais aussi la relation d'un tel réseau par le biais d'une passerelle « gateway » comme le réseau Internet atteint depuis un réseau de téléphonie cellulaire par exemple comme le réseau GSM, ou encore comme un réseau de télédiffusion relayé par une passerelle sur le réseau Internet.

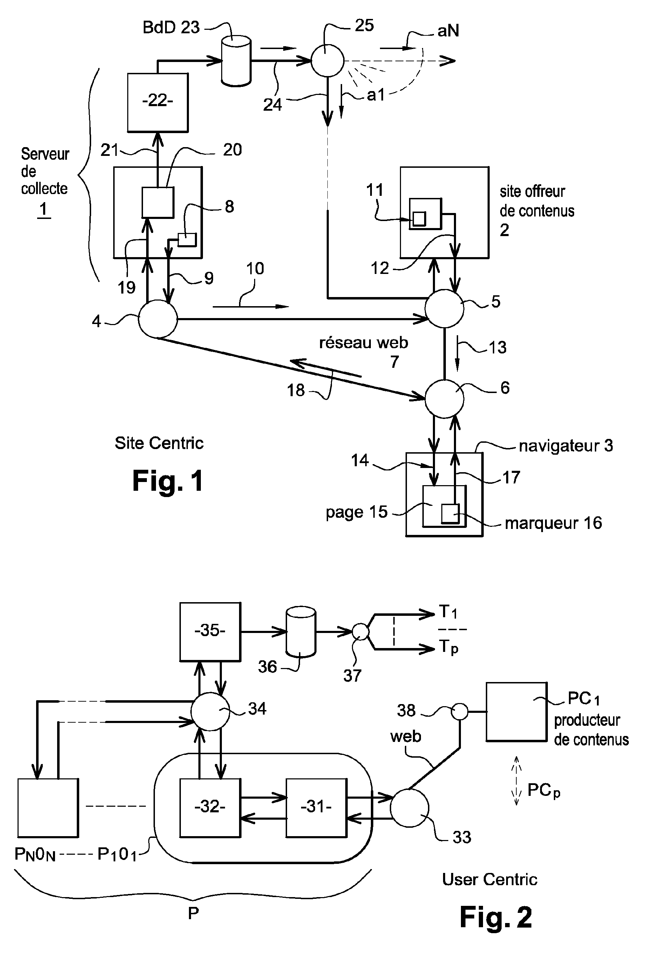

À la figure 1, on a représenté un système de mesure de trafic basé sur la technique des marqueurs ainsi qu'il est connu dans l'état de technique.

Un serveur de collecte et de mesure de trafic 1 est connecté par un moyen de connexion 4 au réseau Internet 7 pour au moins un producteur de contenus 2 qui a établi un site permettant d'offrir des contenus à des utilisateurs comme l'utilisateur 3. L'utilisateur 3 dispose d'un logiciel dénommé "navigateur", qui est doté de ressources pour exécuter localement de petits programmes, souvent appelés "scripts", qui permettent de détecter un certain nombre d'actions menées par l'utilisateur quand il est connecté sur un site offreur de contenus 2.

À cette fin, le serveur de collecte et de mesure de trafic 1 dispose d'une ressource 8 de production de marqueurs, sous forme de scripts qui sont adaptés aux données de mesure de trafic que le site offreur de contenus souhaite connaître.

Lors de l'adhésion de l'éditeur du site 2 offreur de contenus à un contrat de mesure de trafic avec l'exploitant du serveur de collecte et de mesure de trafic 1 assimilé ici à de la mesure d'audience, la ressource 8 de production de marqueurs reçoit un certain nombre de données susceptibles de préparer les marqueurs destinés à être insérés dans au moins une page du site 2 offreur de contenus. À cet effet, lors d'une procédure de requête de chargement, un marqueur 9 est téléchargé sur le site offreur de contenus et, à l'aide d'un outil d'édition adapté chez le site offreur de contenus 2, le marqueur est inséré lors d'une opération d'insertion de marqueurs 11 dans la page cible.

Lors d'une requête d'accès à la page présentée par un utilisateur arbitraire doté d'un navigateur 3, la page est téléchargée selon le chemin 12 à travers une ressource d'accès au réseau Internet 5 disponible sur le site de production et à travers le moyen d'accès à Internet 6 associé à l'utilisateur requérant, la page demandée est téléchargée dans le navigateur 3 sous forme d'une page consultable 15. Sur cette page, l'utilisateur peut exécuter un certain nombre d'actions comme :

-- cliquer sur un lien hypertexte ;
-- saisir un champ de formulaire ;
-- déplacer la souris au-dessus d'une zone comme une image ; etc.

Lors du téléchargement de la page 15, le navigateur 3 décode le marqueur 16 inséré dans la page et le compile en fonction des actions qui sont autant d'événements que le code exécutable inscrit dans le marqueur est capable de détecter et de rapporter sous forme de données qui peuvent être retournées selon un schéma 17 dans une requête HTTP, par exemple, ou bien à destination du producteur de contenus 2, ou bien préférentiellement, dans le cas de la mesure de trafic, vers le serveur 1 de collecte et de mesure de trafic.

Dans ce second cas, qui correspond à l'état de la technique de la présente invention, les données inscrites dans le marqueur sont transmises par le chemin 18 vers la ressource d'accès 4 du serveur de collecte et de mesure de trafic 1 de sorte que le marqueur comportant les données caractéristiques de mesure de trafic sont compilées dans une ressource 20 de compilation de données de mesure de trafic associées à la fois au site offreur de contenus 2, d'une part, et au navigateur 3 ayant retransmis les données de marqueur, d'autre part.

L'ensemble des données qui sont alors récoltées par le serveur 1 de collecte et de mesure de trafic, en provenance de tous les utilisateurs du site 2 offreur de contenu, mais aussi de tous les utilisateurs des autres sites (non représentés) offreurs de contenus et abonnés au serveur 1 de mesure de trafic, sont alors téléchargés par un lien interne de téléchargement vers un processeur statistique 22 qui exploite les données compilées dans la ressource 20 en leur appliquant des traitements statistiques dont les résultats sont transférés dans une base de données 23 qui est alors mise à jour périodiquement, par exemple tous les jours ou toutes les heures. À l'issue d'une période de compilation de données de mesure de trafic, une ressource 24 de fourniture de mesures de trafic est alors connectée à l'aide d'une liaison convenable, comme le réseau Internet lui-même, à l'aide d'une ressource de connexion 25 à l'ensemble des abonnés a1 ... aN, qui détiennent chacun au moins un site fournisseur de contenus comme le site 2 dont les pages portent des marqueurs provenant serveur de mesure de trafic 1.

Ainsi qu'on l'a décrit ci-dessus, une telle mesure de trafic est dirigée vers un module d'utilisation de données de trafic des sites fournisseurs de contenus, mais ne donne aucune indication concernant les caractéristiques personnelles des utilisateurs qui se sont connectés et qui ont fait des requêtes de consultation des contenus des abonnés du serveur de mesure de trafic 1.

En effet, les données collectées sont associées aux navigateurs des utilisateurs et non aux utilisateurs eux-mêmes. Un utilisateur utilisant plusieurs navigateurs ne pourra par conséquent être identifié comme unique. De plus, il n'est pas permis de détecter des données personnelles à l'insu des utilisateurs et il en résulte que la quantité et la pertinence des données qui permettent de caractériser les activités des utilisateurs sur le média constitué par le réseau Internet sont extrêmement réduites.

Il en résulte que les éditeurs de contenus disposent d'informations insuffisantes pour orienter la politique éditoriale des contenus à destination des utilisateurs habituels ou encore qu'il est peu efficace de réaliser des organisations de campagnes de publicité si on cherche à les adapter à des individus réels.

Dans un autre état de la technique, dont un mode de réalisation est représenté à la figure 2, un institut de mesure d'audience a réalisé la formation d'un groupe d'utilisateurs en utilisant les techniques statistiques de formation de panels représentatifs ainsi qu'il est connu dans la mesure d'audience sur les médias traditionnels.

À la figure 2, en a représenté plusieurs utilisateurs appartenant au groupe d'utilisateurs constituant le panel de mesure d'audience P, les utilisateurs possédant chacun un ou plusieurs poste d'accès à Internet $P_1O_1$ à $P_NO_N$, s'il existe N utilisateurs dans le panel P. Chaque poste d'utilisateur comme le poste $P_1O_1$ comporte comme il est connu une ressource d'accès 33 au réseau Internet par laquelle est connecté au moins un navigateur 31 qui est sous le contrôle d'un logiciel 32 qui est exécuté sur le processeur des postes de travail de sorte que les actions de l'utilisateur dont les paramètres personnels ont été pris en compte lors de la formation du panel, sont eux-mêmes retournées par une ressource d'accès 34 à un réseau de connexion à l'institut de mesure d'audience.

L'institut de mesure d'audience possède un ensemble 35 de traitements des actions enregistrées par les logiciels de mesure d'activité des différents postes $P_1O_1$ à $P_NO_N$ qui lui sont connectés par une ressource d'accès 34 ainsi qu'il a été dit ci-dessus.

Ainsi qu'il est connu, l'ensemble 35 de traitements des actions enregistrées par les logiciels de mesure d'activité est connecté à une base de données 36 qui stocke les résultats produits selon des méthodes statistiques connues de mesure d'audience. La détermination des résultats d'audience est périodiquement rapportée par un moyen 37 de génération de rapport d'audience. Le rapport d'audience est alors diffusé aux abonnés $T_1$ à $T_P$.

Lorsqu'un utilisateur membre du panel P, comme l'utilisateur $P_1$, se connecte par sa ressource d'accès Internet 33 au site PC1 des divers producteurs de contenus présents sur le Web comme PC1 à PCP, les actions de connexion qu'il exécute sont détectées par le logiciel 32 qui enregistre des données d'activité et les transmet à l'ensemble 35 de traitement de données d'activité.

Par contre, si un utilisateur non membre du panel P se connectait au site 51, l'institut de mesure d'audience 34-37 ne comptabilise pas, bien entendu, ses activités.

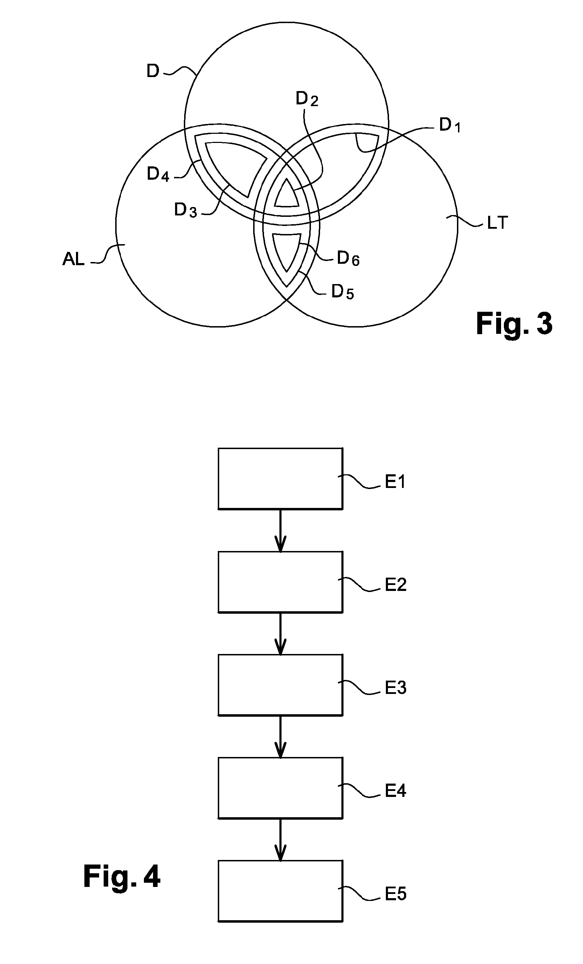

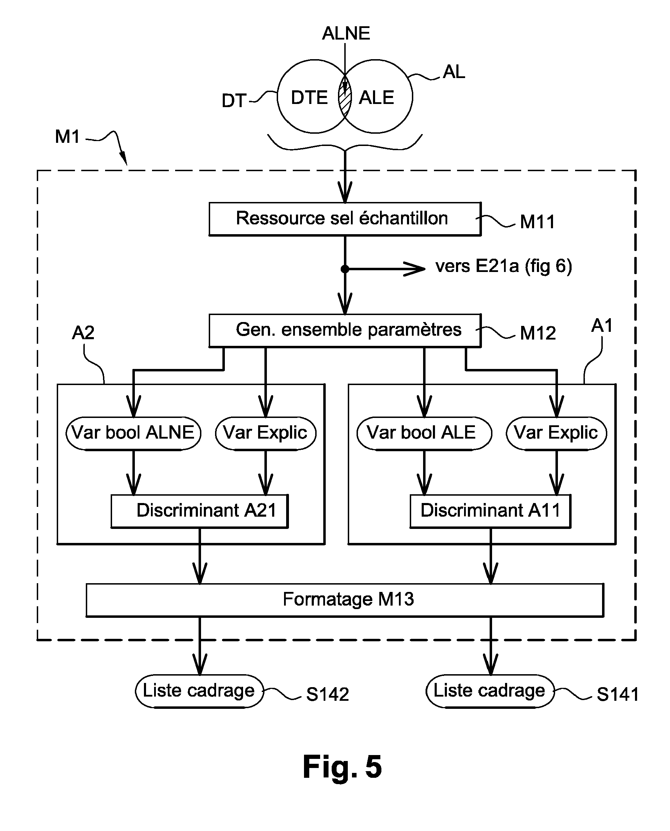

À la figure 3, on a représenté une répartition des utilisateurs du groupe d'utilisateurs prédéterminés mise en oeuvre dans l'invention.

Du fait de la spécialité du média Internet, les utilisateurs, membres du panel ou du groupe d'utilisateurs prédéterminés sont des personnes physiques qui se répartissent en plusieurs zones d'utilisation, ou ainsi qu'on l'a défini plus haut de domaines d'utilisation des médias diffusés sur le réseau Internet et qui sont principalement :

-- le domaine de l'utilisation domestique D dans lequel un utilisateur personnel consulte des contenus sur Internet depuis un ordinateur connecté à son domicile ; et

-- le domaine de l'utilisation professionnelle LT dans lequel un utilisateur personnel consulte des contenus sur Internet depuis un ordinateur connecté à son lieu de travail.

Dans une analyse perfectionnée selon l'invention, on a déterminé un troisième domaine AL qui est constitué par les autres lieux qui ne sont donc, ni du domaine D de l'utilisation domestique, ni du domaine LT de l'utilisation professionnelle. Il s'agit du domaine de l'utilisation en d'autres lieux. Ainsi qu'il a été représenté au graphique, certains utilisateurs qui appartiennent à un domaine d'utilisation déterminée peuvent aussi appartenir à un ou l'autre des autres domaines pris en compte dans la mesure d'audience. Particulièrement pour les utilisateurs appartenant au domaine D d'utilisation domestique ou au domaine LT sur les lieux de travail de l'utilisation professionnelle, il est possible qu'ils accèdent à Internet dans le domaine d'utilisation AL. Dans ce cas, leur utilisation d'Internet sur le domaine d'utilisation AL n'est pas pris en compte en l'état de la technique dans le système de mesure d'audience centré sur l'utilisateur tel que représenté en figure 2, ce qui limite le champ de la mesure d'audience sur le groupe d'utilisateurs prédéterminés à leur domaine d'origine D ou LT.

Selon une caractéristique essentielle de l'invention, pour permettre de comptabiliser dans la mesure d'audience des utilisateurs qui ne se trouvent pas en utilisation déclarée habituelle dans un des domaines D ou LT, on réalise à l'aide d'une ressource de création de sosies, la construction de sosies des utilisateurs exclusifs d'Internet sur le domaine d'utilisation AL.

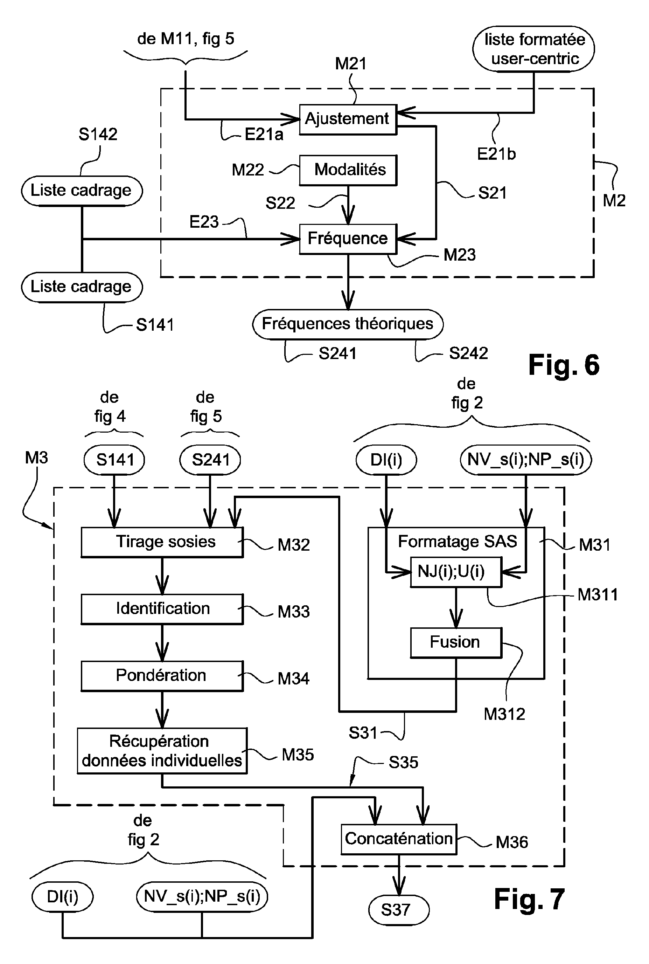

On va maintenant décrire à l'aide de la figure 4 les étapes principales suivies par le système de mesure d'audience selon l'invention.

L'objectif est de produire une mesure d'audience unique représentant l'ensemble des lieux de connexion associés à au moins deux domaines comme les domaines décrits à l'aide de la figure 3, sur un territoire donné comme un territoire national, en conservant les avantages des systèmes de mesure d'audience liés à l'observation des comportements individuels sur l'ensemble des sites Internet.

Un autre objectif du système de l'invention est d'intégrer un processus de production de rapports d'audience qui doivent être produits de manière à permettre la gestion éditoriale et publicitaire des sites mesurés. En effet, c'est en fonction d'indicateurs statistiques et de leurs variations qu'un producteur de contenus est capable de modifier le contenu mis à disposition des utilisateurs des sites Internet de façon à améliorer son audience. Il en résulte que le traitement des données collectées auprès du panel d'utilisateurs, ainsi que le traitement proprement dit du système de l'invention permettant de tenir compte d'utilisations hors la zone d'utilisation prédéterminée du panel, doivent être effectués suivant la même périodicité.

Le système de mesure d'audience selon l'invention comporte des moyens permettant, à partir d'au moins deux sources de données relatives à la mesure de trafic et/ou à la mesure d'audience d'un site Internet ou d'un media disponible ou diffusé sur un autre réseau de communications ainsi que d'une ressource additionnelle, de produire un fichier de données individuelles de même format que celui issu du système de mesure d'audience centrée sur l'utilisateur et qui soit représentatif de l'ensemble des domaines regroupant les lieux de connexion sur un territoire donné, comme le territoire national.

Lorsque un système de mesure d'audience utilise un groupe prédéterminé d'utilisateurs de sites Internet, dans l'état de la technique ainsi qu'il a été exposé notamment à l'aide de la figure 2, deux phénomènes ne sont pas pris en compte par un tel système de mesure d'audience :

-- les connexions à Internet des membres du panel ou groupe d'utilisateurs prédéterminé depuis des domaines d'utilisation d'Internet qui ne sont pas équipés des ressources de mesure d'audience caractéristiques du système de mesure d'audience sur groupe prédéterminé d'utilisateurs de sites Internet ; et

-- l'ensemble des connexions à Internet produites par les individus se connectant à Internet exclusivement depuis des domaines d'utilisation d'Internet qui ne sont pas équipés des ressources de mesure d'audience caractéristiques du système de mesure d'audience sur groupe prédéterminé d'utilisateurs de sites Internet.

À la figure 3, on a représenté trois domaines qui sont respectivement :

-- le domaine D des utilisateurs du groupe prédéterminé d'utilisateurs qui se connectent à l'Internet par l'intermédiaire d'une machine sur le domicile ;

-- le domaine LT des utilisateurs qui se connectent par l'intermédiaire d'une machine sur le lieu de travail ; et

-- le domaine AL des utilisateurs, quelque soit leur appartenance ou non au groupe prédéterminé d'utilisateurs, et qui se connecte à des machines qui ne sont ni sur le domicile ni sur le lieu de travail.

On détermine ainsi au moins six zones d'intersection de domaines qui sont :

-- la zone D1 des membres du domaine D du domicile qui opèrent aussi depuis le domaine LT des lieux de travail ;

-- la zone D5 des membres du domaine LT des lieux de travail qui opèrent aussi sur le domaine AL des autres lieux ;

-- la zone D4 des membres du domaine AL des autres lieux qui opèrent aussi dans le domaine D du domicile ;

-- la zone D2, interne à la zone D1, des membres du domaine D du domicile qui opèrent depuis le domaine LT des lieux de travail, mais aussi depuis le domaine AL des autres lieux

-- la zone D3, interne à la zone D4, des membres n'opèrent que du domaine AL des autres lieux et du domaine D du domicile

-- la zone D6, interne à la zone D5, des membres qui n'opèrent que depuis le domaine LT des lieux de travail et du domaine AL des autres lieux.

Pour pallier les limites du système de mesure d'audience dans l'état de la technique ainsi qu'il a été exposé notamment à l'aide de la figure 2, le système de mesure d'audience de l'invention exécute un traitement de cinq étapes qui sont résumées dans l'organigramme de la figure 4.

À l'étape E1, on réalise une production de données de cadrage ; puis à l'étape E2, on exécute le calcul de structures théoriques; puis à l'étape E3, on exécute le tirage de sosies d'utilisateurs faisant partie d'un domaine non couvert par un système de mesure d'audience centré sur l'utilisateur parmi les utilisateurs membres du panel P ; puis à l'étape E4, on exécute la simulation des actions effectuées dans des domaines qui ne sont pas comptabilisés dans un système de mesure d'audience centrée sur l'utilisateur par les utilisateurs se trouvant à l'intersection du domaine couvert par un système de mesure d'audience centré sur l'utilisateur et des autres domaines ; et à l'étape E5, on exécute le calage des résultats d'audience produits à partir de la base de données individuelles intégrant l'audience depuis les autres domaines sur ceux produits par le système de mesure centrée sur le site.

On va maintenant expliciter les dispositions exécutées lors des cinq étapes précitées en décrivant les composants mis en oeuvre dans le système de mesure d'audience de l'invention pour exécuter ces étapes de traitement.

Le système de mesure d'audience de l'invention comporte un premier composant de production de données de cadrage M1, représenté à la figure 5. Le composant de production de données de cadrage M1 consiste en un moyen pour caractériser les profils sociodémographiques et les usages Internet pour chacun des domaines ou zones pris en compte dans l'organisation choisie de la mesure d'audience.

À la figure 5, on a représenté la source des données de mesure d'audience qui sont prises en compte dans un mode de réalisation par le premier composant du système de mesure d'audience de l'invention. Cette source des données a été modélisée sous la forme de domaines principaux, respectivement l'union DT des domaines D du domicile et LT des lieux de travail et le domaine des autres lieux, dit domaine AL. L'intersection des deux domaines représente la zone ALNE des utilisateurs qui opèrent à la fois dans le domaine DT et dans le domaine AL tandis que les zones DTE et ALE sont des zones dans lesquelles les membres opèrent exclusivement sur l'un des domaines. L'invention ne se limite pas à cette répartition de domaines, ni aux qualifications de ces domaines.

Le moyen pour caractériser les profils sociodémographiques et les usages Internet pour chacun des domaines ou zones pris en compte comporte une ressource M11 pour sélectionner un échantillon d'utilisateurs d'Internet, dont la taille est calculée de manière que chaque sous-population ait une taille supérieure à un seuil minimal prédéterminé. De manière préférée, la ressource de sélection d'un échantillon d'utilisateurs comporte un moyen de contact permettant d'établir un formulaire d'interrogation de manière à renseigner les valeurs mesurables qui seront décrites plus loin. Le premier composant M1 comporte aussi un moyen M12 pour produire un ensemble déterminé de paramètres mesurables permettant de spécifier le profil sociodémographique et l'usage d'Internet pour chaque individu de l'échantillon.

Le moyen pour caractériser les profils sociodémographiques et les usages Internet pour chacun des domaines ou zones pris en compte comporte ensuite une ressource A1 pour conduire une première analyse de détermination des caractéristiques discriminantes permettant de différencier les individus de la zone ALE des individus du domaine DT.

Dans un exemple de réalisation, la ressource A1 pour conduire une première analyse comporte un moyen A11 pour réaliser une analyse discriminante sur un sous-échantillon contenant les zones ALE et DT. Le moyen pour isoler des variables explicatives permet d'appliquer des méthodes statistiques connues d'analyse discriminante à une variable de type booléen ALE et aux variables de profil sociodémographique et d'usages d'Internet sur la base des paramètres mesurables du profil sociodémographique et de l'usage d'Internet produits par le moyen M12.

Le moyen pour caractériser les profils sociodémographiques et les usages Internet pour chacun des domaines ou zones pris en compte comporte ensuite une ressource A2 pour conduire une seconde analyse de détermination d'une variable de différenciation entre deux zones ou domaines, comme une différenciation entre les zones ALNE et DTE en terme de profil sociodémographique et d'usages d'Internet dans la zone d'utilisation DT commune aux individus des zones ALNE et DTE.

Dans un exemple de réalisation, la ressource pour conduire une seconde analyse comporte un moyen A21 pour réaliser une analyse discriminante sur un sous-échantillon contenant les zones ALNE et les zones DTE. Le moyen pour isoler des variables explicatives consiste à appliquer des méthodes statistiques connues d'analyse discriminante à une variable de type booléen ALNE et aux variables de profil sociodémographique et d'usages d'Internet dans la zone DT.

Le premier composant de production de données de cadrage comporte enfin une ressource M13 pour générer selon un format de données prédéterminé les listes S141 et S142 des variables discriminantes des comportements des individus caractéristiques des zones respectives ALE et ALNE. Ces listes S141 et S142 constituent les données de cadrage au sens de l'invention. Elles comportent notamment les données de profil des utilisateurs de zones de type ALE et les données de profil des zones de type ALNE.

Le système de mesure d'audience de l'invention comporte un second composant M2 de mise en cohérence des données de cadrage S141 et S142 issues du premier composant M1 avec les données issues des mesures d'audience centrées sur les utilisateurs au moyen d'un système du genre représenté à la figure 2. Un mode particulier de réalisation du second composant du système de mesure d'audience de l'invention a été décrit à l'aide de la figure 6.

Le second composant M2 de mise en cohérence des données de cadrage reçoit les listes formatées S141 et S142 des données caractéristiques des utilisateurs issues du premier composant M1, ainsi qu'une liste formatée des données caractéristiques des mesures d'audience centrée sur les utilisateurs selon le principe d'un système de mesure d'audience selon la figure 2.

Le second composant M2 produit en sortie les listes S241 et S242 de fréquences théoriques d'usages Internet caractéristiques des utilisateurs des zones respectives ALE et ALNE, ces fréquences théoriques d'usages Internet étant transmises comme données d'entrée des troisième et quatrième composants du système de mesure d'audience de l'invention qui seront décrits plus loin.

Le second composant M2 comporte essentiellement un premier module M21 qui exécute le calcul de coefficients d'ajustement des données présentées à son entrée respectivement :

-- une entrée E21a qui prélève les données déclaratives d'utilisation Internet pour les individus appartenant au domaine DT dans l'échantillon généré par la ressource M11; et
-- une entrée E21 b qui prélève des données caractéristiques de l'activité des utilisateurs du domaine DT issu du système de mesure d'audience centré sur l'utilisateur du genre de celui représenté à la figure 2.

Le coefficient d'ajustement produit par le premier module M21 est calculé comme le rapport des taux d'usages mesurés par le système de mesure d'audience centré sur l'utilisateur dans la zone d'utilisation DT du domicile et des lieux de travail pour la population comptabilisée dans le domaine DT sur les taux usages comptabilisés dans l'échantillon prélevé sur cette même population. Le module d'ajustement M21 produit un coefficient d'ajustement pour chaque donnée mesurée caractéristique de l'échantillon d'utilisateurs prédéterminé.

Le second composant M2 comporte ensuite un second module M22 qui permet de déterminer des modalités pour le calcul d'une variable de fréquence de connexion à Internet. Dans l'exemple de réalisation, les modalités sont prévues :

-- pour tous les jours ;
-- pour presque tous les jours ;
-- deux à trois fois par semaine ; et
-- une à trois fois par mois.

Bien entendu dans d'autres exemples de réalisation, il existe d'autres modalités pour le calcul d'une variable de fréquence de connexion Internet.

Le second composant M2 comporte ensuite un troisième module M23 qui permet de déterminer le découpage en nombre de jours de connexion à appliquer au système de mesure d'audience centrée sur l'utilisateur de manière à obtenir une distribution des fréquences de connexion conforme à celle issue du premier composant M1. On utilise les fréquences théoriques de l'usage pour les populations du domaine DT et, sur la base du découpage des périodes de connexion déterminé par le second module M22 de détermination des modalités, le troisième module M23 détermine le découpage en nombre de jours de dans la zone DT du domicile et des lieux de travail des individus appartenant à cette zone DT quand ils sont mesurés par un système de mesure d'audience centrée sur l'utilisateur et qui permet de respecter les fréquences obtenues E23 et S21 dans l'échantillon de population déterminé précédemment pour chaque modalité de la fréquence de connexion.

Par exemple, si 50% des individus du domaine DT sont comptabilisés pour la modalité de connexion « tous les jours » (première modalité déterminée dans le second module M22) dans le cadre d'une utilisation de l'Internet au domicile et/ou sur les lieux de travail. Dans le système de mesure d'audience centré sur l'utilisateur, 50% des individus de l'échantillon d'utilisateurs prédéterminés se sont connectés à Internet entre 15 et 31 jours. La modalité « tous les jours » sera donc associée à la tranche « entre 15 et 31 jours » du système de mesure d'audience centré sur l'utilisateur.

Le système de mesure d'audience de l'invention comporte un troisième composant M3 pour rechercher parmi une partie de l'échantillon suivie par un système de mesure d'audience centré sur les utilisateurs, les utilisateurs dont le profil sociodémographique et dont le comportement d'audience Internet s'apparente à celui des individus de la zone ALE c'est-à-dire qui ne se connectent que depuis d'autres lieux.

En entrée du troisième composant M3, on trouve respectivement :

-- les listes formatées S141 et S142 issues du premier composant M1 (figure 5) ;
-- les listes des fréquences théoriques S241 et S242 issues du second composant M2 (figure 6) ;
-- un fichier des données individuelles {DI(i) ; i } contenant, pour chaque individu d'un groupe d'utilisateurs prédéterminé, le profil sociodémographique produit par un système de mesure d'audience centrée sur l'utilisateur du type de celui représenté à la figure 2 ; et
-- un fichier de données individuelles {NV_s(i), NP_s(i) ; i ; s} contenant, pour chaque individu i d'un groupe d'utilisateurs prédéterminés, le nombre de visites NV_s(i) et le nombre de pages vues NP_s(i) sur chaque site s par jour daté.

Le troisième composant M3 comporte un premier module M31 de mise en forme des données individuelles permettant de produire une table ayant un format déterminé, comme une table au format de l'atelier de traitement statistique SAS (marque déposée), utilisable pour les autres modules suivants. Le premier module M31 de mise en forme des données individuelles reçoit en entrée les données individuelles {DI(i) ; i} et {NV_s(i), NP_s(i) ; i ; s}, produites par le système de mesure d'audience centré sur l'utilisateur du genre de celui de la figure 2. Le premier module M31 comporte une première ressource de calcul M311, pour chaque individu, du nombre de jours de connexion à Internet et d'une variable descriptive des usages sur Internet au cours de la période t, déterminée par la modalité choisi dans le module M22 du second composant M2, pour chacune des variables discriminantes déterminées dans la ressource A21 du premier composant M1.

Sur la base du calcul effectué par la première ressource de calcul M311, on exécute ensuite dans une seconde ressource M312, la fusion des tables pour chaque individu de profils et d'usages qui ont été calculée pour chaque individu dans la première ressource M311. La sortie du premier module M31 est alors transmise à une entrée d'un module M32 du troisième composant qui sera décrit plus loin.

Le troisième composant M3 comporte un second module M32 pour effectuer le tirage de sosies d'utilisateurs du domaine ALE (voir figure 5). Dans un mode particulier de réalisation, on exécute un tirage équilibré, exécuté sur la base de moyens connus. En entrée du second module M32, on fournit respectivement les listes S141 des valeurs théoriques de profils et d'usages Internet des utilisateurs du domaine ALE, S241 des fréquences théoriques issues du second composant M32 et le fichier S31 issu du module M31.

En sortie du second module M32, on fournit la liste S32 des individus sosies à dupliquer dans les fichiers de données individuelles selon une caractéristique essentielle de la présente invention.

La liste S32 produite est transmise à l'entrée d'un troisième module M33 de création de nouveaux identifiants à chaque sosie dans la liste S32. La liste des sosies S32 avec les anciens et nouveaux identifiants et les données les caractérisant est transmise en entrée d'un quatrième module M34 exécutant une pondération en fonction de la taille de l'échantillon de sosies obtenu dans le module précédent M32 et de la proportion théorique d'individus du domaine ALE au sein de l'ensemble des utilisateurs s'étant connecté à Internet au cours de la période t, déterminée par la ressource de détermination du premier composant M1.

Le troisième composant M3 comporte un cinquième module M35 qui exécute la récupération des données individuelles des fichiers ou des listes formatées, respectivement {DI(i) ; i} et {NV_s(i), NP_s (i) ; i ; s}, produits par un système de mesure d'audience centré sur l'utilisateur du type de celui représenté à la figure 2 et les associe aux nouveaux identifiants déterminés dans le troisième module M33. La liste de sortie S35 du cinquième module M35 est transmise à une entrée du sixième module précité M36 qui exécute la concaténation des données individuelles S35 des sosies avec les données individuelles {DI(i) ; i} et {NV_s (i), NP_s (i) ; i ; s}, produites par un système de mesure d'audience centrée sur l'utilisateur du genre de celui de la figure 2.

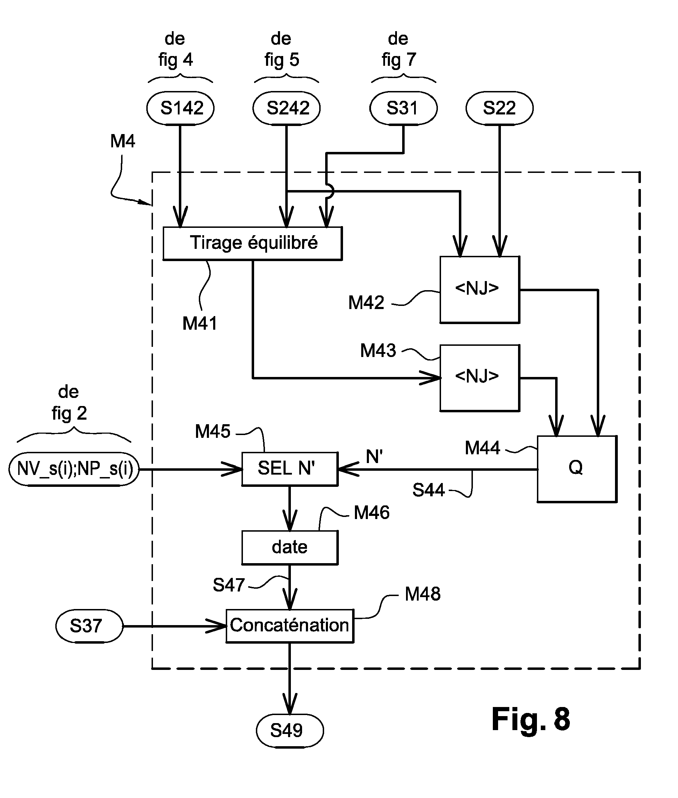

On obtient en sortie du troisième composant M3 de nouveaux fichiers S37 de données individuelles intégrant la population des individus de la zone ALE (voir figure 7).

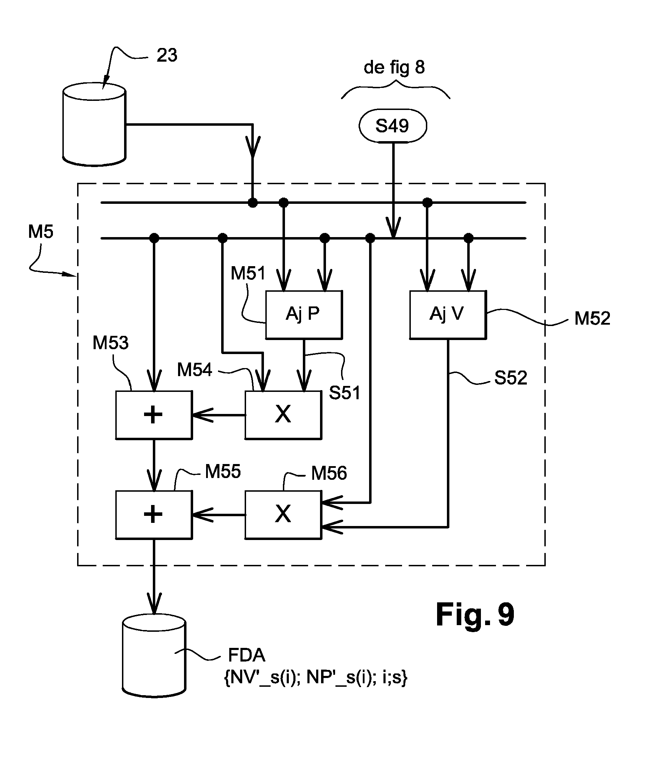

À la figure 8, on a représenté un mode particulier de réalisation du quatrième composant M4 du système de mesure d'audience selon l'invention.

Le quatrième composant M4 reçoit en entrée les listes ou fichiers S142 issues du premier composant M1 (figure 5), S242 issues du second composant M2 (figure 6), S31 issues du troisième composant (figure 7) et {NV_s(i), NP_s (i) ; i ; s} regroupant le nombre de visites NV_s(i) et le nombre de pages vues NP_s(i) sur chaque site s pour chaque utilisateur i de l'échantillon analysé sur la base d'un système de mesure d'audience centré sur l'utilisateur comme celui représenté à la figure 2.

Le quatrième composant M4 comporte un premier module M41 exécutant un tirage équilibré pour sélectionner des utilisateurs appartenant au domaine ALNE (voir figure 5). Le premier module M41 du quatrième composant exécute un tirage équilibré à l'aide de la même méthode que celle indiquée pour le tirage des sosies du second module M32 du troisième composant M3 précités. Le premier module M41 de sélection des utilisateurs reçoit en entrée les listes S142 issue du premier composant M1 et S242 issue du second composant M2 et le fichier S31 issu du troisième composant. Elle produit à sa sortie S41 une liste des individus sélectionnés sur la base d'un tirage équilibré.

Le quatrième composant M4 comporte un second module M42 qui permet de déterminer le nombre moyen de jours de connexion mesuré par un système de mesure d'audience centrée sur l'utilisateur pour les modalités telles qu'établies en M22 de manière à obtenir une distribution des fréquences de connexion conforme à celle issue du premier composant M1 sur la population du domaine DT déterminé ainsi qu'il a été représenté et expliqué à l'aide de la figure 5, les dites mesures étant exécutées à l'aide du second composant M2 ainsi qu'il a été expliqué.

Le quatrième composant M4 comporte un troisième module M43 qui produit le calcul du nombre moyen de jours de connexion des individus appartenant au domaine ALNE (voir figure 5) sur les autres lieux d'une part et sur la zone DT d'autre part.

Les données produites en sortie des second M42 et troisième M43 modules sont connectées aux entrées d'un quatrième module M44 du quatrième composant M4 qui calcule le rapport des nombres moyens de jours de connexion calculés et fournis à ces entrées. La sortie du quatrième module M44 de calcul de ratios transmet une donnée de ratio S44 à l'entrée d'un cinquième module M45 du quatrième composant M4 qui exécute la sélection aléatoire d'un nombre déterminé d'enregistrement au sein du fichier de données d'audience initiale inscrit dans une base de données {NV_s (i), NP_s(i) ; i ; s} initiale qui lui est connectée en entrée.

Le quatrième composant M4 comporte enfin un sixième module M46 qui produit une modification de la date de chaque enregistrement associé à la sélection aléatoire produite par le cinquième module M45 sur une méthode pseudo déterministe.

Les enregistrements modifiés S47 sont ensuite transmis à une entrée du module M48 qui exécute la concaténation des enregistrements modifiés S47 avec les données individuelles S37 de type {NV_s(i), NP_s(i) ; i ; s}, produites en sortie du troisième composant M3.

On obtient en sortie du quatrième composant M4 de nouveaux fichiers S49 de données individuelles intégrant l'utilisation d'Internet dans le domaine AL de la population des individus de la zone ALNE (voir figure 8).

À la figure 9, on a représenté un cinquième composant M5 du système de mesure d'audience selon l'invention.

Le cinquième composant M5 reçoit en entrée les rapports statistiques issus du système de mesure de trafic centré sur le site stockés dans la base de données 23 déjà décrite à la figure précédente 1, ainsi que la sortie S49 du quatrième composant M4 décrit à l'aide de la figure 8 précédente. Le cinquième composant M5 produit en sortie un fichier de données individuelles FDA de type {NV'_s(i), NP'_s(i) ; i ; s} dans lequel les totaux de pages vues et de visites coïncident avec les totaux de pages vues et de visites stockés dans la base de données 23.

Le cinquième composant M5 comporte un premier module M51 qui exécute le calcul d'un coefficient d'ajustement pour le nombre de pages vues pour un site s déterminé, pour un individu k déterminé et pour une date j déterminée. Dans un mode particulier de réalisation, le coefficient d'ajustement pour le site s, BETA_s, calculé par le premier module M51 est donné par la relation :

$$BETA\_s = \frac{t\_site(NP\_s)}{Somme(\ Somme(NP\_s(k,\ j)\ ;\ j)\ ;\ k)}$$

dans laquelle on réalise une double somme d'abord sur l'ensemble des dates j de la période considérée, puis sur l'ensemble des individus k sur les données S49 en sortie du quatrième composant M4, et dans laquelle le numérateur t_site(NP_s) est constitué par le total de pages vues pour le site s stocké dans la base de données 23.

Le cinquième composant M5 comporte un second module M52 qui exécute le calcul d'un coefficient d'ajustement pour le nombre de visites du site s, pour un individu k déterminé et pour une date j déterminée. Dans un mode particulier de réalisation, le coefficient d'ajustement pour le site s, GAMMA_s, calculé par le second module M52 est donné par la relation :

$$GAMMA\_s = \frac{t\_site(NV\_s)}{Somme(\ Somme(NV\_s(k,\ j)\ ;\ j)\ ;\ k)}$$

dans laquelle on réalise une double somme d'abord sur l'ensemble des dates j de la période considérée, puis sur l'ensemble des individus k sur les données S49 en sortie du quatrième composant M4, et dans laquelle le numérateur t_site(NV_s) est constitué par le total de visites effectuées sur le site s stocké dans la base de données 23.

La sortie S51 du premier module M51 et la sortie S52 du second module M52 sont communiquées à une première entrée des multiplicateurs respectifs M54 et M56 qui reçoivent dans une seconde entrée le fichier de données individuelles de type {NV_s(i), NP_s(i) ; i ; s} en sortie du module M48 du quatrième composant. Les multiplicateurs respectifs M54 et M56 permettent de calculer le nombre de visites NV'_s(i) et le nombre de pages vues NP'_s(i) pour chaque utilisateur i par multiplication de NV_s(i) par GAMMA_s et de NP_s(i) par BETA_s.

Le cinquième composant M5 comporte un troisième module M53 qui ajoute le champ NP'_s(i) fourni à une première entrée du troisième module M53, au fichier S49 en sortie du quatrième composant M4 fourni à une seconde entrée du troisième module M53.

De même, le cinquième composant M5 comporte un quatrième module M54 qui ajoute un champ NV'_s(i) fourni à une première entrée du quatrième module M54, au fichier en sortie du troisième module M53.

Les données individuelles produit en sortie du cinquième composant M5 sont alors enregistrées dans une base de données FDA de mesure d'audience du système de mesure d'audience de l'invention.

La base de données de sortie FDA du système de mesure d'audience de l'invention comporte donc l'ensemble des données individuelles correspondant aux utilisateurs de l'échantillon d'utilisateurs prédéterminé traité par un système de mesure d'audience centré sur l'utilisateur de l'état de la technique, mais auquel on a ajouté des données permettant de tenir compte notamment des domaines d'intersection des zones caractérisant les utilisateurs de l'échantillon d'utilisateurs prédéterminé.

**Revendications**

1. - Système de mesure d'audience sur une collection de réseaux comportant au moins un réseau de communications, sur lesquels une pluralité de medias sont diffusés ou mis à disposition et dans lequel une pluralité d'utilisateurs prédéterminés est associée à un premier jeu de machines connectées à un réseau de ladite collection de réseaux, dans une première zone d'utilisation et à au moins un second jeu de machines connectées à un réseau de ladite collection de réseaux, dans une seconde zone d'utilisation, **caractérisé en ce qu'**un moyen de calcul (M1 - M5) est prévu pour produire, à partir du premier jeu de machines (DT), des sosies d'utilisateurs pour au moins une autre zone d'utilisation (AL) de manière à reconstituer la pluralité des utilisateurs et des zones d'utilisation.

2. - Système selon la revendication 1, **caractérisé en ce qu'**il comporte un premier composant (M1) qui comporte des moyens pour produire des données de cadrage (S141 et S142) à partir d'une mesure déclarative d'utilisation du média par zone d'utilisation sur une période de temps donnée sur la base d'un échantillon d'utilisateurs du média (DTE, ALE, ALNE).

3. - Système selon la revendication 2, **caractérisé en ce qu'**il comporte un second composant (M2) qui comporte des moyens (M21, M22, M23) pour produire une liste de fréquences théoriques d'utilisation du média sur les autres zones d'utilisation sur la base des données de cadrage produites par ledit premier composant et sur la base de données {NV_s(i), NP_s(i) ; i , s} regroupant le nombre de visites NV_s(i) et le nombre de pages vues NP_s(i) sur le site s pour chaque utilisateur i de l'échantillon, la base étant produite par un système de mesure d'audience centré sur l'utilisateur.

4. - Système selon la revendication 3, **caractérisé en ce qu'**il comporte un troisième composant (M3) qui traite les données (S141, S241) issues des premier (M1) et second (M2) composants de manière à créer des sosies des utilisateurs ALE se trouvant hors de la zone d'utilisation (DT) couverte par un système de mesure d'audience centré sur l'utilisateur, les données étant issues du troisième composant intégrant les données d'audience depuis les autres zones d'utilisation (AL) des utilisateurs exclusifs des autres zones d'utilisation (AL) non couvertes par un système de mesure d'audience centré sur l'utilisateur (DT).

5. - Système selon la revendication 4, **caractérisé en ce qu'**il comporte un quatrième composant (M4) qui traite les données (S142, S242) issues des premier (M1) et second (M2) composants de manière à déterminer les utilisateurs ALNE se trouvant à l'intersection de la zone d'utilisation (DT) couverte par un système de mesure d'audience centré sur l'utilisateur et des autres zones d'utilisation (AL) et à calculer un taux de sondage permettant la sélection aléatoire d'enregistrements de la base de données des utilisateurs, les données étant issues du quatrième composant intégrant les données d'audience depuis les autres zones d'utilisation des utilisateurs se trouvant à l'intersection de la zone d'utilisation couverte par un système de mesure d'audience centré sur l'utilisateur (DT) et des autres zones d'utilisation (AL).

6. - Système selon la revendication 5, **caractérisé en ce qu'**il comporte un cinquième composant (M5) de réalisation d'un calage des résultats d'audience qui comporte un moyen (M51, M52) pour réaliser des ajustements de données individuelles issues de l'échantillon d'utilisateurs du groupe d'utilisateurs prédéterminés et un moyen (M53 - M56) pour les intégrer aux données de la base de données initiale issue d'un système de mesure d'audience centré sur l'utilisateur de manière à produire une base de données (FDA) de mesure d'audiences d'une pluralité (s) de sites Internet tenant compte de l'ensemble des domaines d'utilisation du média.

Site Centric

**Fig. 1**

User Centric

**Fig. 2**

D

$D_2$

$D_1$

$D_4$

$D_3$

LT

AL

$D_6$

$D_5$

**Fig. 3**

E1

E2

E3

E4

**Fig. 4**

E5

**Fig. 5**

**Fig. 6**

**Fig. 7**

de
fig 4

de
fig 5

de
fig 7

( S142 )    ( S242 )    ( S31 )    ( S22 )

M4

Tirage équilibré

M41

<NJ>

M42

M43          <NJ>

de
fig 2

M45

( NV_s(i);NP_s(i) )    →    SEL N'    ←    N'    M44        Q

S44

M46

date

S47

( S37 )    →    Concaténation    M48

( S49 )

**Fig. 8**

**Fig. 9**